# FASCICULE DE BREVET EUROPEEN

(11) **EP 3 473 300 B1**
(45) Date de publication et mention de la délivrance du brevet: **13.05.2020**
(21) Numéro de dépôt: 18200467.1
(22) Date de dépôt: 15.10.2018
(51) Int. Cl.: A62B 7/14, A62B 9/04, A62B 25/00, A62B 18/08

(54) **MASQUE RESPIRATOIRE POUR AERONEF ET PROCEDE DE MISE EN POSITION REPLIEE D'UN MASQUE RESPIRATOIRE POUR SON RANGEMENT DANS UNE UNITE DE RANGEMENT**
ATMUNGSMASKE FÜR LUFTFAHRZEUG, UND VERFAHREN ZUM ZUSAMMENFALTEN EINER ATMUNGSMASKE FÜR IHRE VERSTAUUNG IN EINER AUFBEWAHRUNGSEINHEIT
BREATHING MASK FOR AIRCRAFT AND METHOD FOR PLACING A BREATHING MASK IN A FOLDED POSITION FOR STORAGE IN A STORAGE UNIT

(30) Priorité: 17.10.2017 FR 1759748
(43) Date de publication de la demande: 24.04.2019
(73) Titulaire: Zodiac Aerotechnics, 78373 Plaisir Cedex (FR)
(72) Inventeur: CANET, Laura, 75015 Paris (FR); LAMOURETTE, Didier, 78690 Les Essarts le Roi (FR)
(74) Mandataire: Plasseraud IP

(56) Documents cités:
- EP-A1- 0 645 164
- EP-A1- 2 060 294
- EP-A1- 2 773 432
- WO-A1-2015/177584
- US-A1- 2003 000 001

## Description

### Domaine de l'invention

L'invention concerne un masque respiratoire pour aéronef, destiné à fournir un gaz respiratoire à un utilisateur, un ensemble pour la fourniture de gaz respiratoire comprenant un masque respiratoire et un procédé de mise en position repliée d'un masque respiratoire pour son rangement dans une unité de rangement.

### Contexte de l'invention

L'invention vise à fournir une solution de rangement et d'utilisation d'un système d'assistance constitué par un masque respiratoire et fournissant un gaz respiratoire à un utilisateur, tel que qu'un membre d'équipage, en cas par exemple de situation d'urgence. La fourniture de ce gaz respiratoire se fait à l'aide d'un masque respiratoire. Le masque respiratoire comprend une coque, présentant une cavité respiratoire et adaptée pour s'appliquer sur le visage du membre d'équipage, notamment autour de la bouche et du nez. Le masque respiratoire comprend également un harnais. Ce harnais est adapté pour s'étendre autour de la tête de l'utilisateur à l'opposé de la coque, afin de maintenir la coque sur le visage de l'utilisateur.

Le masque respiratoire comprend de manière optionnelle un écran de protection. L'écran de protection permet de protéger les yeux de l'utilisateur contre les éventuelles projections, en particulier de la fumée. Dans une position repliée, le masque respiratoire est disposé dans une unité de rangement, située dans une cabine d'un aéronef, généralement un avion commercial, transportant des passagers et un équipage. L'avion comprend en outre généralement un dispositif de pressurisation qui pressurise la cabine afin de permettre aux passagers ainsi qu'aux membres de l'équipage de respirer normalement au sein de la cabine.

En cas de nécessité (en particulier en cas de dépressurisation, de port préventif, ou de présence de gaz nocif ou de fumée), l'utilisateur de l'équipement d'urgence, qui est habituellement le pilote ou le co-pilote, attrape le masque respiratoire qui est situé dans l'unité de rangement. L'utilisateur place ensuite le masque respiratoire autour de sa tête afin de pouvoir respirer au travers du masque respiratoire, lui fournissant ainsi du gaz respiratoire.

L'unité de rangement est ainsi importante afin de protéger le masque respiratoire lorsque celui-ci n'est pas utilisé.

En outre, en situation d'urgence, le masque respiratoire doit être mis en position rapidement (en moins de 5 secondes) et de façon sûre sur la tête du membre d'équipage pour des questions de réglementation et de sécurité. De plus, il est nécessaire que le masque respiratoire puisse être manipulé d'une seule main, ceci permettant au membre d'équipage de continuer ses tâches à l'aide de son autre main laissée libre.

Afin de respecter ces prérequis, un harnais de masque respiratoire habituellement utilisé est un harnais gonflable. Le harnais s'allonge ainsi en taille sous l'effet de l'introduction de gaz sous pression à l'intérieur de celui-ci, ce qui permet le passage de la tête du pilote à travers le harnais et le positionnement du masque respiratoire sur la tête de l'utilisateur. L'introduction du gaz sous pression dans le harnais est contrôlée par une valve. Une fois le masque respiratoire positionné de façon appropriée, le gaz sous pression est libéré, ce qui entraine la contraction du harnais autour de la tête de l'utilisateur, permettant ainsi à la coque d'être correctement appliquée sur le visage de l'utilisateur. Par ailleurs, dans un souci de rapidité au déploiement et à la mise en place du masque respiratoire sur la tête de l'utilisateur, il est également important d'éviter tout obstacle qui pourrait ralentir le gonflement du harnais. A cet effet, le document EP 2 773 432 B1 divulgue une méthode pour ranger un masque respiratoire dans une unité de rangement. Cette méthode consiste à éviter tout pli ou nœud survenant le long du harnais lorsque le masque respiratoire est rangé dans l'unité de rangement. Ainsi, le harnais comprend une sangle sur laquelle il est nécessaire de tirer pour le tendre au cours de la manipulation de rangement dans l'unité de rangement. Cependant, cette solution ne remplit pas entière satisfaction. En effet, une fois le masque respiratoire rangé dans l'unité de rangement, il n'est pas possible de vérifier que le masque respiratoire a été rangé de manière appropriée.

### Exposé de l'invention

A cet effet, conformément à l'invention, le masque respiratoire présente les caractéristiques suivantes :
- le masque respiratoire comprend en outre un système de repliement adapté pour faire passer le harnais d'une position étendue à une position repliée,
- le système de repliement comprend un dispositif de traction et un dispositif de guidage,
- le dispositif de traction présente une portion de liaison reliée au harnais et une portion de préhension,
- le dispositif de guidage est relié à la coque,
- le dispositif de traction est mobile entre :
   - une première position dans laquelle le dispositif de traction autorise le harnais à être en position étendue, et
   - une deuxième position dans laquelle le dispositif de traction maintient le harnais dans la position repliée, et
- le dispositif de guidage coopère avec le dispositif de traction pour guider le dispositif de traction entre la position étendue et la position repliée.

Le système de repliement contribue à obtenir sensiblement la même position repliée du harnais, ce qui permet de réduire le risque que le harnais ne se déploie pas de manière satisfaisante lors du gonflage. Le système de repliement est donc un outil fiable permettant le rangement du masque respiratoire dans la position adéquate. La bonne position repliée est d'autant plus importante qu'elle permet le bon déploiement du masque respiratoire et donc une mise en place rapide du masque respiratoire sur la tête de l'utilisateur.

Selon une autre caractéristique conforme à l'invention, de préférence le masque respiratoire comprend en outre un écran de protection adapté pour protéger les yeux de l'utilisateur, et le dispositif de guidage est fixé à la coque au-dessus de l'écran de protection, selon un axe vertical.

Ainsi, le système de repliement n'interfère pas avec la tête du membre d'équipage lors de l'utilisation du masque respiratoire.

Selon une caractéristique complémentaire conforme à l'invention, de préférence, lorsque le harnais est en position étendue, la portion de préhension est disposée au-dessus de l'écran de protection, selon une projection suivant une direction perpendiculaire au plan de l'écran de protection.

Ainsi, la portion de préhension n'interfère pas avec le champ de vision de l'utilisateur.

Selon une autre caractéristique conforme à l'invention, le dispositif de traction est de préférence monté mobile (uniquement) en translation par rapport au dispositif de guidage, entre la première position et la deuxième position.

Ainsi, l'usage du système de repliement est intuitif, le risque d'un mauvais usage est par conséquent réduit.

Selon une autre caractéristique conforme à l'invention, de préférence le dispositif de traction comprend une première portion de liaison reliée au harnais et une deuxième portion de liaison reliée au harnais, lorsque le dispositif de traction est dans la première position la première portion de liaison est éloignée (selon un axe transversal) de la deuxième portion de liaison d'une première distance, le dispositif de guidage comprend un premier élément de guidage et un deuxième élément de guidage, le premier élément de guidage est séparé du deuxième élément de guidage d'une deuxième distance, et la première distance est supérieure à la deuxième distance d'au moins 3 centimètres.

Ainsi, lorsque le harnais est en position repliée, non seulement l'encombrement du harnais est réduit selon la direction de l'axe horizontal dans laquelle il est tiré sur le dispositif de traction, mais également selon la direction de l'axe transversal du fait que la première portion de liaison et la deuxième portion de liaison sont rapprochées l'une de l'autre lorsque le dispositif de traction passe de la première position à la deuxième position.

Selon encore une autre caractéristique conforme à l'invention, de préférence le dispositif de traction comprend une bande de matière élastiquement flexible, afin de supporter le harnais lorsque le masque respiratoire est en position étendue.

Ainsi, la bande de matière élastiquement flexible agit à l'encontre de la pesanteur pour soutenir le harnais, ce qui facilite sa mise en place sur le visage de l'utilisateur.

Dans divers modes de réalisation du masque respiratoire selon l'invention, on peut éventuellement avoir recours en outre à l'une et/ou à l'autre des dispositions suivantes :
- le harnais comprend une portion supérieure et une portion inférieure, la portion de liaison du dispositif de traction étant fixée sur la portion supérieure du harnais ;
- le dispositif de traction comprend un lien, le lien se terminant d'une part par la portion de liaison et d'autre part par la portion de préhension ;
- le lien coulisse dans le dispositif de guidage, pour moduler le masque respiratoire entre la position étendue et la position repliée ;
- lorsque le harnais est en position étendue, la longueur entre la portion de liaison et le dispositif de guidage est supérieure à la longueur entre le dispositif de guidage et la portion de préhension ;
- lorsque le harnais est en position repliée, la longueur entre la portion de liaison et le dispositif de guidage est inférieure à la longueur entre le dispositif de guidage et la portion de préhension ;
- le masque respiratoire comprend un support rigide auquel est liée la coque, le support rigide comprend une zone de réception apte à recevoir la portion de préhension du dispositif de traction, et lorsque le dispositif de traction est dans la deuxième position, l'élément de préhension est disposé dans la zone de réception du support rigide.

L'invention concerne en outre un ensemble comprenant, outre le masque respiratoire, une unité de rangement apte à recevoir le masque respiratoire, l'unité de rangement comprenant un logement et une ouverture d'accès apte à permettre l'introduction du masque respiratoire dans le logement, dans lequel, dans une position rangée de l'ensemble dans laquelle le masque respiratoire est en position repliée, la portion de préhension est disposée à proximité de l'ouverture d'accès.

Ainsi, lorsque le masque respiratoire est en position rangée l'utilisateur peut s'assurer du positionnement correct de la portion de préhension et par conséquent que le harnais a été placée dans la position repliée satisfaisante.

Selon une autre caractéristique conforme à l'invention, de préférence le masque respiratoire comprend un support rigide auquel est liée la coque et présentant une zone de réception, et la portion de préhension est maintenue entre le logement et la zone de réception du support rigide lorsque l'ensemble est dans la position rangée.

Selon encore une autre caractéristique conforme à l'invention, de préférence le logement comprend une empreinte et l'empreinte a une forme complémentaire de la forme de la portion de préhension, la portion de préhension est maintenue dans ladite empreinte lorsque l'ensemble est dans la position rangée.

Enfin, l'invention concerne un procédé de repliement d'un masque respiratoire pour son rangement dans une unité de rangement, le masque respiratoire comprenant une coque, un harnais, un système de repliement, la coque présentant une cavité respiratoire et étant adaptée pour s'appliquer sur le visage d'un utilisateur, le système de repliement comprenant un dispositif de traction et un dispositif de guidage coopérant avec le dispositif de traction, le dispositif de traction comprenant une portion de préhension, dans lequel procédé dans une étape a) on tire sur le dispositif de traction au travers du dispositif de guidage en saisissant la portion de préhension pour faire passer le masque respiratoire d'une position initiale étendue à une position finale repliée.

Selon une autre caractéristique conforme à l'invention, de préférence le masque respiratoire comprend en outre un support rigide, le dispositif de traction comprend un lien, le lien présente une portion de liaison et une portion de préhension, la portion de liaison étant fixée sur le harnais, et :
- lors d'une étape b), postérieure à l'étape a) on ramène la portion de préhension au niveau du support rigide,
- lors d'une étape c), on insère le masque respiratoire dans l'unité de rangement, et
- lors d'une étape d), on dispose la portion de liaison à proximité de l'ouverture d'accès, de sorte qu'elle est visible lorsque le masque respiratoire est en position rangée.

Lors de l'étape a), la portion de liaison est en butée contre le dispositif de guidage.

### Brève description des figures

La figure 1 est une vue en perspective d'un masque respiratoire selon un premier mode de réalisation conforme à l'invention, le masque respiratoire comprenant un harnais en position étendue et dégonflé.
La figure 2 est une vue de profil du masque respiratoire selon une variante du premier mode de réalisation, le harnais étant en position étendue et dégonflé.
La figure 3 est une vue en perspective du masque respiratoire selon le premier mode de réalisation, le harnais étant en position repliée.
La figure 4 est une vue de profil d'un masque respiratoire selon la variante du premier mode de réalisation, le harnais étant en position repliée.
La figure 5 est une vue en perspective d'un masque respiratoire selon un deuxième mode de réalisation conforme à l'invention, le harnais étant en position étendue et gonflé.
La figure 6 est une vue de profil du masque respiratoire selon le deuxième mode de réalisation, le harnais étant en position étendue et dégonflé.
La figure 7 est une vue en perspective du masque respiratoire selon le deuxième mode de réalisation, le harnais étant en position repliée.
La figure 8 est une vue partielle de dessus du deuxième mode de réalisation.
La figure 9 est une vue partielle en perspective du deuxième mode de réalisation.
La figure 10 illustre un ensemble comprenant un masque respiratoire et un dispositif de rangement, selon un mode de réalisation conforme à l'invention, le masque respiratoire étant en position rangée dans l'unité de rangement.
La figure 11 est une représentation de l'ensemble de la figure 10 selon la flèche repérée XI à la figure 10.

### Description détaillée de l'invention

Dans la suite de la description, les éléments identiques ou de fonction identique portent le même signe de référence. À fin de concision de la présente description, ces éléments ne sont pas décrits dans le cadre de chaque mode de réalisation, seules les différences entre les différents modes de réalisation étant décrites en détail.

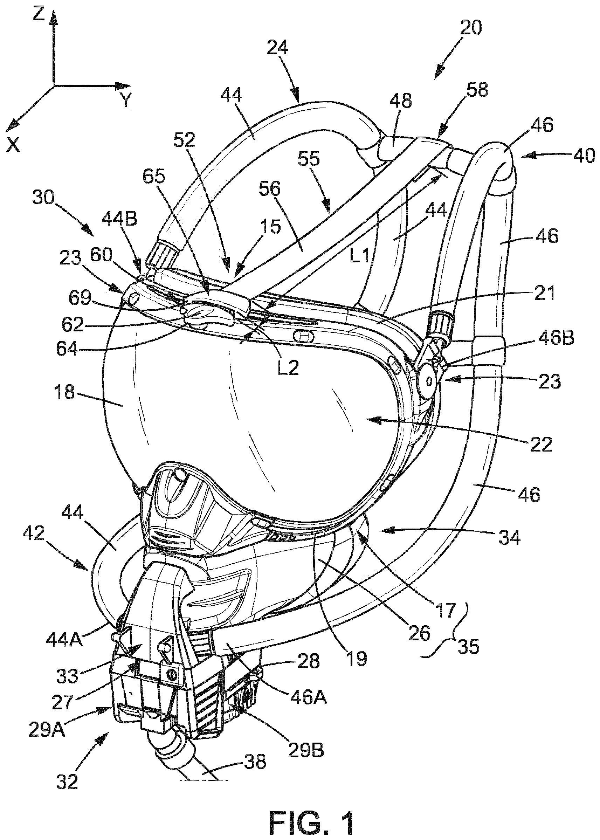

Les figures 1 à 4 illustrent un masque respiratoire 20. Le masque respiratoire 20 comprend notamment une coque 35, un harnais 24 et un support rigide 28. Selon un axe vertical Z, correspondant à l'axe longitudinal du corps humain lorsque le masque respiratoire 20 est porté sur une tête d'un utilisateur, le masque respiratoire 20 comprend une partie haute 30 et une partie basse 32. Le masque respiratoire 20 présente un plan de symétrie s'étendant perpendiculairement à un axe transversal Y.

Dans les modes de réalisation illustrés, le masque respiratoire 20 comprend une pièce oronasale 26 et un écran de protection 22, l'écran protecteur de protection 22 étant fixé de manière amovible sur la pièce oronasale 26. En variante, la pièce oronasale 26 et l'écran de protection 22 pourraient constituer un ensemble indissociable.

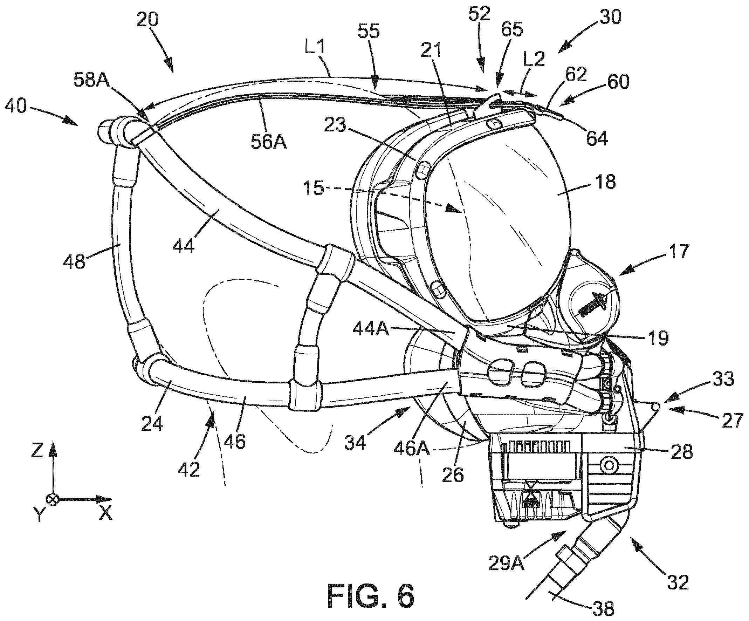

La pièce oronasale 26, présente une cavité respiratoire 34. La cavité respiratoire 34 est adaptée pour s'appliquer sur le visage de l'utilisateur. Plus précisément, comme visible à la figure 6, la cavité respiratoire 34 s'applique autour de la bouche et du nez de l'utilisateur.

L'écran de protection 22 comprend une lentille transparente 18 et un support périphérique 17. La lentille transparente 18 est légèrement bombée et s'étend sensiblement perpendiculairement à un axe horizontal X, perpendiculaire à l'axe vertical Z et à l'axe transversal Y. L'axe horizontal X correspond à l'axe antéro-postérieur du corps humain lorsque le masque respiratoire 20 est porté sur une tête d'un utilisateur, autrement dit la direction de l'axe horizontal X correspond sensiblement à la direction du regard de l'utilisateur. L'écran de protection 22 est situé en partie haute 30 du masque respiratoire 20. Il permet de protéger les yeux de l'utilisateur, en cas de fumée par exemple. L'écran de protection 22 comprend une face avant 36 et une face arrière (non-visible sur les figures). La face avant 36 est destinée à être en contact avec l'environnement extérieur. La face arrière est destinée à être en regard du visage d'un utilisateur. Le support périphérique 17 comprend notamment deux parties latérales 23, une bordure supérieure 21 et une bordure inférieure 19. Chaque partie latérale 23 reçoit une deuxième extrémité des boucles 44B, 46B du harnais 24. La bordure inférieure 19 est eu contact de la pièce oronasal 26 ou du moins en regard et à proximité de la pièce oronasale 26. L'écran de protection 22 comprend en outre une cavité 15 ayant une ouverture sur la face arrière du masque respiratoire 20.

La coque 35 comprend la pièce oronasale 26 et le support périphérique 17 de l'écran de protection 22. Dans la variante où la pièce oronasale 26 et l'écran protecteur des yeux 22 constituent un ensemble indissociable, la cavité 15 de l'écran de protection 22 et la cavité 34 de la pièce oronasale 26 communiquent en permanence l'une avec l'autre et en particulier il peut ne pas exister de séparation entre la cavité 15 de l'écran de protection 22 et la cavité 13 de la pièce oronasale 26, de sorte qu'elles forment une unique cavité.

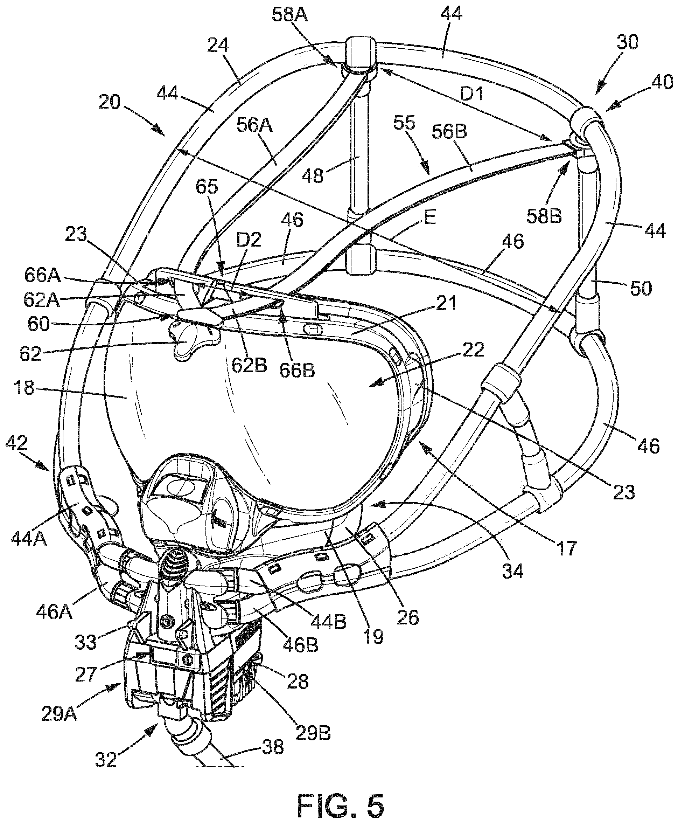

Dans les modes de réalisation illustrés, le harnais 24 est un harnais gonflable. Le harnais 24 est configurable entre une position gonflée, illustrée à la figure 5, et une position dégonflée, illustrée par exemple aux figures 1, 3 et 6. Lorsque le masque respiratoire 20 est porté par un utilisateur, le harnais vient autour de sa tête.

Selon l'axe vertical Z, le harnais 24 comprend une portion supérieure 40 et une portion inférieure 42. Le harnais comprend en outre deux boucles 44, 46. Chaque boucle est disposée de part et d'autre du masque respiratoire 20, latéralement. Les deux boucles 44, 46 sont reliées entre-elles par des éléments d'espacement 48, 50. Dans le mode de réalisation illustré aux figures 1 à 4, le harnais 24 comprend deux éléments d'espacement. Le premier élément d'espacement 48 est disposé dans la portion supérieure 40 du harnais 24. Le deuxième élément d'espacement 50 et disposé dans la portion inférieure du harnais 24. Sur la figure 1, par rapport à l'axe vertical Z, les premier et deuxième éléments d'espacement 48, 50 sont orientés perpendiculairement par rapport à l'axe vertical Z.

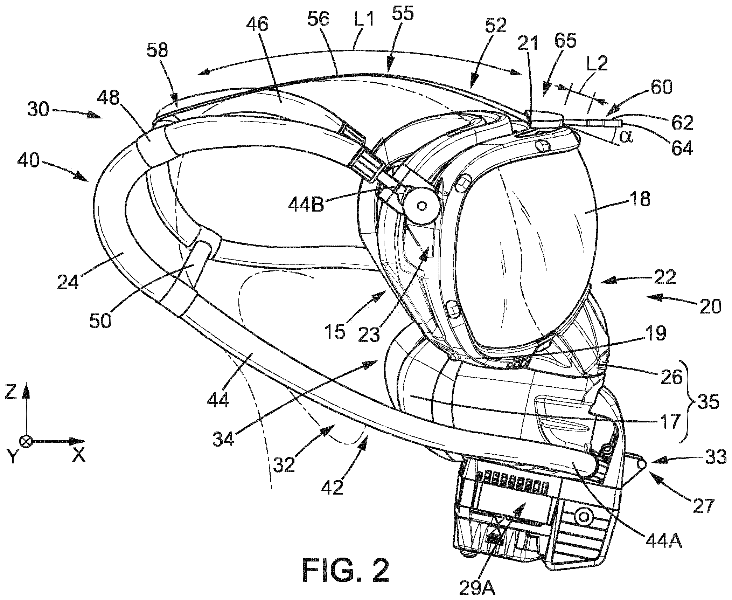

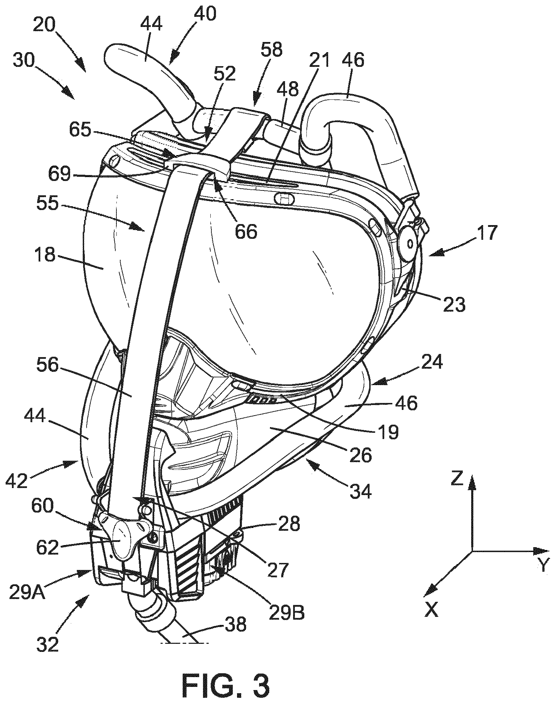

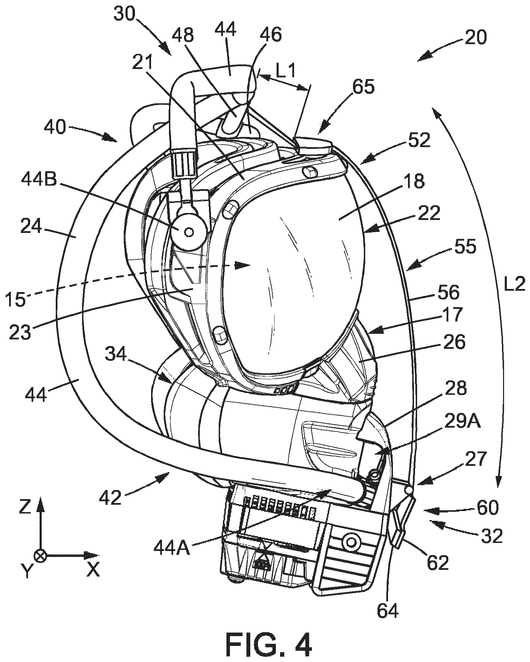

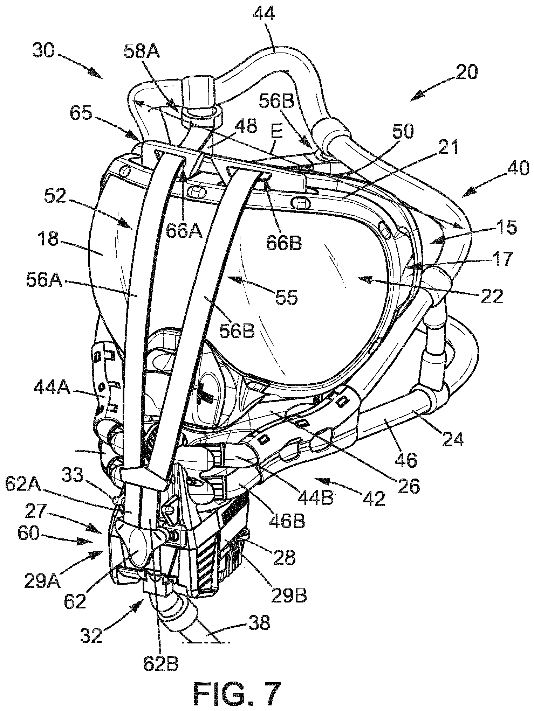

Le support rigide 28 est situé dans la partie basse 32. Plus précisément, dans le premier mode de réalisation illustré aux figures 1 et 3 et dans le deuxième mode de réalisation illustré aux figures 5 à 9, le support rigide 28 est situé sensiblement sous la pièce oronasale 26 suivant l'axe vertical, tandis que dans la variante du premier mode de réalisation illustré aux figures 2 et 4 le support rigide 28 est situé sensiblement devant la pièce oronasale 26. Le support rigide 28 renferme un régulateur permettant de délivrer du gaz respiratoire à la demande à l'utilisateur. En outre, le support rigide renferme une valve de gonflage du harnais, qui permet d'introduire du gaz sous pression (du gaz respiratoire dans les modes de réalisation illustrés) dans le harnais pour son gonflage. Le régulateur et (dans les modes de réalisation illustrés) la valve de gonflage sont alimentés en gaz respiratoire par un tuyau d'alimentation 38 raccordé au support rigide 28. De plus, le support rigide 28 comprend deux parties latérales 29A, 29B, notamment destinées à la préhension du masque respiratoire 20 en pinçant le support rigide 28 entre les parties latérales 29A, 29B. Chaque partie latérale 29A, 29B reçoit une première extrémité des boucles 44A, 46A du harnais 24. Le support rigide 28 comprend également une zone de réception 27 et un dispositif de retenue, visible par exemple sur les figures 1 et 3.

En outre, tel qu'illustré aux figures 1 à 4, le masque respiratoire 20 comprend un système de repliement 52. Ce système de repliement 52 est adapté pour faire passer le harnais d'une position étendue, illustrée à la figure 1, à une position repliée, illustrée à la figure 3. Le système de repliement 52 comprend notamment un dispositif de traction 55 et un dispositif de guidage 65. Le dispositif de traction 55 est mobile par rapport au dispositif de guidage 65 entre une première position illustrée aux figures 1 et 2 et une deuxième position illustrée aux figures 3 et 4.

Le dispositif de traction 55 comprend un lien 56. Le lien 56 présente une portion de liaison 58 et une portion de préhension 60. Le lien 56 s'étend entre la portion de liaison 58 et la portion de préhension 60 sensiblement selon l'axe horizontal X.

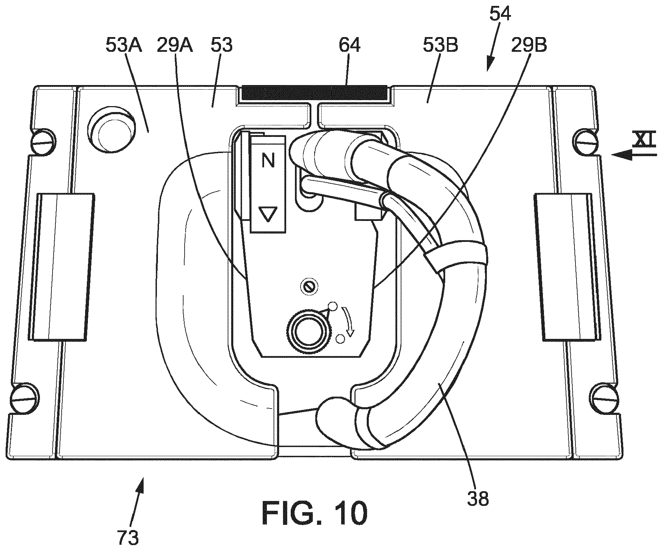

La portion de liaison 58 est reliée au harnais 24. Selon l'exemple illustré sur les figures 1 à 4, la portion de liaison 55 est disposée sur le premier élément d'espacement 48 du harnais 24. En variante, la portion de liaison 58 pourrait être disposée sur une boucle 44 ou 46 du harnais 24. Dans les modes de réalisation illustrés, la portion de préhension 60 comprend un élément de préhension 62 distinct du lien 56. Toutefois, l'élément de préhension 62 pourrait être intégré au lien 56. L'élément de préhension 62 permet de saisir le dispositif de traction 55 afin de mettre le masque respiratoire 20 dans sa position repliée, lorsque le harnais est dégonflé. L'élément de préhension 62 est de forme sensiblement plate. Par exemple, l'épaisseur de l'élément de préhension 62 est comprise entre 1 mm et 2,5 mm. L'épaisseur de l'élément de préhension est avantageusement de 1,5 mm plus ou moins 25% près. En outre, l'élément de préhension 62 comprend une surface d'arrêt 63 et une tranche libre 64. Cette tranche 64 joue le rôle de témoin de repliement. Comme visible à la figure 10, la tranche 64 permet de constater par un contrôle visuel que le masque respiratoire 20 est rangé de façon appropriée dans une unité de rangement 54. La tranche 64 peut par exemple être une bande de couleur différente de l'unité de rangement 54, ce qui permet de l'identifier facilement. Par exemple la tranche 64 peut être de couleur rouge alors que l'unité de rangement 54 est de couleur marron.

Dans les modes de réalisation illustrés sur les figures 1 à 4, le lien 56 est en forme de sangle. On entend ici par sangle une bande plate, de matière et d'épaisseur sensiblement constante. Selon un autre exemple de réalisation, le lien peut être tout autre moyen permettant d'effectuer une action de traction. Il peut s'agir par exemple d'une corde, d'une ficelle, d'une chaîne ou encore d'un câble.

D'autre part, dans le premier mode de réalisation illustré aux figures 1 et 3, le lien 56 est souple et ne présente qu'une faible résistance en flexion suivant l'axe transversal Y. En revanche selon la variante de réalisation illustrée aux figures 2 et 4, le lien 56 est élastiquement flexible, semi-rigide. Par exemple, le lien 56 comprend un matériau peu chargé en fibres, présentant l'avantage d'être non cassant et de présenter un faible coefficient de frottement. Par exemple, le lien comprend du polypropylène (PP), de l'acrylonitrile butadiène styrène (ABS), du polycarbonate (PC), du polyétherimide (PEI) ou analogue. Le matériau du lien 56 étant élastiquement flexible, le lien 56 permet de s'opposer au fait que le harnais gonflable ne tombe pas sous son propre poids, sous l'action de la pesanteur. En d'autres termes, lorsque le harnais 24 est en position étendue, visible par exemple à la figure 2, le lien 56 agit contre l'effet de la pesanteur sur le harnais 24. Lorsque le masque respiratoire est tenu par la portion rigide 28, le lien 56 permet de maintenir le harnais 24 dans la position étendue, correspondant sensiblement à la configuration du masque respiratoire 20 lorsque celui-ci est porté par un utilisateur. Le lien 56 facilite ainsi la mise en place du masque respiratoire sur la tête de l'utilisateur. Dans tous les cas, le matériau utilisé pour lien 56 doit fournir un confort à l'utilisateur lors du port du masque respiratoire 20 et une certaine adaptabilité à la morphologie de la tête de l'utilisateur.

Le dispositif de guidage 65, quant à lui, est disposé sur l'écran de protection 26. Plus précisément, le dispositif de guidage 65 est disposé à l'opposé du support rigide 28 suivant l'axe vertical Z. Le dispositif de guidage 65 est en fait agencé sur la bordure supérieure 21 de l'écran de protection 22. Le dispositif de guidage 65 comprend un passage 66. Ce passage 66 est dimensionné de façon à permettre le passage du lien 56. Selon l'exemple illustré sur les figures 1 à 4, le passage 66 est une fente. Cette fente est de forme adaptée à laisser passer une sangle. La fente est de largeur légèrement supérieure à celle de la sangle afin de permettre à la sangle de coulisser dans le dispositif de guidage 65 sensiblement suivant l'axe horizontal X, sensiblement sans autre mouvement entre le lien 56 et le dispositif de guidage. En particulier, dans la variante du premier mode de réalisation illustré aux figures 1 et 3, le lien 56 ne peut (quasiment) pas pivoter autour de l'axe transversal Y par rapport au dispositif de guidage 65. Dans le premier mode de réalisation, la fente est de largeur constante sur toute sa longueur, autrement dit la fente présente une forme parallélépipédique rectangle, ce qui autorise uniquement un mouvement d'avant en arrière de la sangle. C'est donc la forme de la fente qui conditionne le mouvement de coulissement de la sangle dans le dispositif de guidage 65. Le passage 66 peut comprendre deux (ou plus) tronçons légèrement distants l'un de l'autre suivant la direction de l'axe horizontal X.

D'autres formes peuvent être réalisées, en fonction de la forme du lien. Par exemple, le passage 66 peut être une gouttière. Selon un autre exemple, le passage 66 de section circulaire.

En outre, le système de repliement est adapté pour éviter que la portion de préhension 62 entre dans le champ de vision de l'utilisateur lorsque le harnais 24 est en position étendue. En effet, la portion de préhension 62 s'étend vers le haut (en s'éloignant de la lentille transparente 18 en projection suivant l'axe vertical) et vers l'avant (en s'éloignant du dispositif de guidage 65 en projection suivant l'axe horizontal 65).

A cet effet, dans le cas du premier mode de réalisation illustré aux figures 1 et 3, on peut prévoir que le passage se termine par une légère inclinaison vers l'avant et vers le haut dans une vue de profil telle qu'illustrée à la figure 2, ce qui fait remonter la portion de préhension 60 et l'éloigne donc du champ de vision. Il pourrait également être prévu une inclinaison appropriée ou un bourrelet sur la surface d'arrêt 63 ou sur une surface de butée 69 du dispositif de guidage 65, la surface d'arrêt 63 du dispositif de traction 55 venant au contact de la surface de butée 69 lorsque le dispositif de traction est dans la première position. Dans le cas de la variante du premier mode de réalisation illustrée aux figures 2 et 4, le dispositif de traction 55 la portion de préhension 60 présente une angulation α au niveau (à proximité) de la portion de préhension 60.

A présent, les positions étendue et repliée du harnais 24 sont décrites en relation avec les figures 1 à 4.

Lorsque le harnais 24 est en position étendue, comme visible sur les figures 1 et 2, le dispositif de traction 65 est dans la première position, la longueur L1 du lien 56 qui se situe entre la portion de liaison 58 et le dispositif de guidage 65 est supérieure à la longueur L2 du lien 56 qui se situe entre le dispositif de guidage 65 et la portion de préhension 60. En d'autres termes, la portion de liaison 58 est éloignée de l'écran de protection 22. En particulier, de préférence la surface d'arrêt 63 de la portion de préhension 60 est au contact de la surface de butée 69 du dispositif de guidage 65, de sorte que la longueur L2 est nulle. En outre, la portion de préhension 60 est agencée sur la partie haute 30 du masque respiratoire 20. Plus précisément, en considérant l'axe vertical Z, passant ici par le dispositif de guidage 55, la projection horizontale selon l'axe horizontal X de la portion de préhension 62 sur l'axe vertical Z est au-dessus de la lentille transparente 18.

En amenant le dispositif de traction dans la deuxième position, alors que le harnais 24 est dégonflé, le harnais 24 est amené en position repliée, comme visible sur les figures 3 et 4. Lorsque le harnais 24 est en position repliée, la longueur L1 du lien 56 qui se situe entre la portion de liaison 58 et le dispositif de guidage 65 est inférieure à la longueur L2 du lien 56 qui se situe entre le dispositif de guidage 65 et la portion de préhension 60. En d'autres termes, la portion de liaison 58 est proche de l'écran de protection 22. En outre, la portion de préhension 60 est disposée dans la zone de réception 27 du support rigide 28. De préférence, la surface d'arrêt 63 est en butée contre le dispositif de retenue 33.

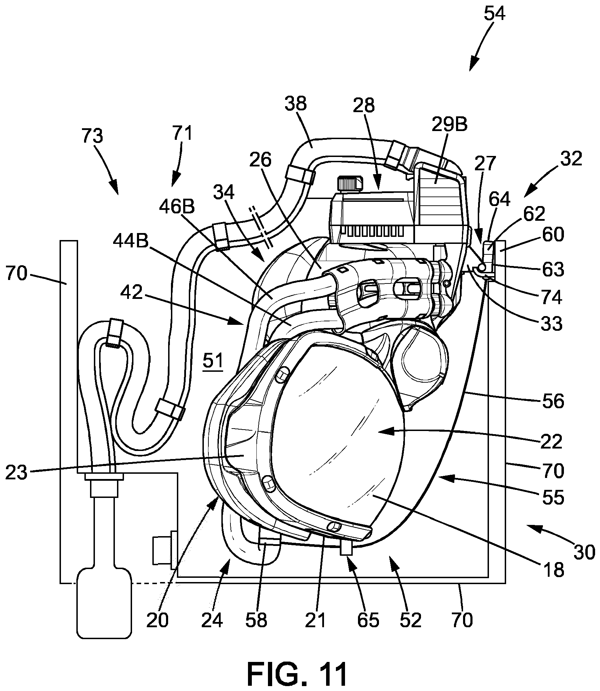

Lorsque le harnais 24 est en position repliée, son rangement est possible dans l'unité de rangement 54, tel qu'illustré aux figures 10 et 11. L'unité de rangement 54 et le masque respiratoire 20 forment un ensemble 73. L'ensemble 73 fournit notamment un gaz respiratoire à un utilisateur. L'unité de rangement 54 est par exemple une boîte de stockage. L'unité de rangement 54 comprend notamment des parois 70, incluant des parois latérales et une paroi de fond. Les parois 70 forment un logement 51. L'unité de rangement 54 comprend de plus une ouverture d'accès 71 à l'opposé de la paroi de fond. L'ouverture d'accès 71 est apte à permettre l'introduction du masque respiratoire 20 dans le logement 51. En outre, une empreinte 72 est formée sur une des parois 70. L'empreinte 72 est formée à proximité de l'ouverture d'accès 71. De plus, une portion de coopération 74 du logement située à proximité de l'empreinte 72 coopère avec le dispositif de retenue 33 du masque respiratoire pour retenir le masque respiratoire 20 par rapport à l'unité de rangement 54 en position rangée. Avantageusement, le dispositif de retenue 33 comprend deux ergots et la portion de coopération 74 du logement 51 comprend deux crochets. L'unité de rangement 54 comprend également une partie mobile 53. La partie mobile 53 est composée de deux volets (portes) 53A, 53B pivotant chacun latéralement entre une position fermée et une position ouverte pour ouvrir l'unité de rangement 54, dégager l'ouverture d'accès 71 et accéder au masque respiratoire 20. La partie mobile 53 constitue en fait la face avant de l'unité de rangement 54 qui est accessible à l'utilisateur. La partie mobile 53 ferme l'ouverture d'accès 71. L'empreinte est apte à recevoir la portion de préhension 60. L'élément de préhension 60 est donc maintenu dans l'empreinte 72 lorsque le masque respiratoire 20 est rangé dans l'unité de rangement 51. En outre, la partie mobile comporte un passage qui est en regard de l'élément de préhension 60.De ce fait, la tranche libre 64 de l'élément de préhension 62 est visible lorsque la partie mobile 53 ferme l'ouverture d'accès 71. Dans un autre exemple de réalisation, la partie mobile 53 peut comprendre un seul volet. Selon encore un autre exemple, l'unité de rangement 54 ne comprend pas de partie mobile.

On décrit à présent le procédé de mise en position repliée du harnais 24. La mise en position repliée du harnais 24 permet notamment le rangement du masque respiratoire 20 dans l'unité de rangement 54.

Dans une première étape a), on tire sur le dispositif de traction 55 au travers du dispositif de guidage 65. Plus précisément, on tire sur la portion de préhension 60, en saisissant l'élément de préhension 62 pour le faire passer de la première position à la deuxième position. Le harnais 24, dégonflé, passe ainsi d'une position initiale étendue à une position finale repliée. A la fin de cette étape a), la portion de liaison 58 est en butée contre le dispositif de guidage 65.

Dans une étape b), on ramène la portion de préhension 60 dans la zone de réception 27 du support rigide 28 avec la surface d'arrêt 63 en butée contre le dispositif de retenue 33. L'étape b) est postérieure à l'étape a).

Dans une étape c), on insère le masque respiratoire 20 dans l'unité de rangement 54. L'étape c) est de préférence postérieure à l'étape b).

Dans une étape d), on place la portion de préhension à proximité de l'ouverture d'accès 71 et on amène le dispositif de retenue 33 en coopération avec la portion de coopération 74, de sorte que le masque respiratoire 20 est retenu par rapport au logement 51, que la portion de préhension 60 est maintenue par le masque respiratoire 20, le logement 51 et la surface d'arrêt 63 qui vient en butée contre le dispositif de retenue 33 et que la tranche libre 64 est visible, lorsque le masque respiratoire est en position rangée dans l'unité de rangement 54, et lorsque l'unité de rangement 54 est fermée. Selon un exemple de réalisation l'étape d) est postérieure à l'étape c). Selon autre exemple, les étapes c) et d) se font simultanément.

A présent, un deuxième mode de réalisation est décrit, tel qu'illustré aux figures 5 à 9. Les éléments exposés ci-dessous ne sont relatifs qu'aux éléments qui diffèrent du premier mode de réalisation. Comme visible par exemple sur la figure 5, ce mode de réalisation se distingue du premier mode de réalisation par essentiellement deux caractéristiques distinctes, à savoir le harnais 24 et le dispositif de traction 55.

Comme visible par exemple sur la figure 5, le harnais 24 comprend deux boucles 44, 46: une boucle 44 supérieure et une boucle 46 inférieure. Les premières extrémités 44A et 46A des boucles 44, 46 ont pour origine une première partie latérale 29A du support rigide 28. De même les deuxièmes extrémités 44B et 46B des boucles 44, 46 ont pour origine une deuxième partie latérale 29B du support rigide 28. Les deux boucles 44, 46 sont notamment reliées entre-elles par des éléments d'espacement 48, 50, s'étendant suivant une direction globalement parallèle à l'axe vertical Z.

En outre, dans ce deuxième exemple de réalisation, le dispositif de traction 55 comprend un premier lien 56A et un deuxième lien 56B, au lieu d'un seul lien 56 dans le premier mode de réalisation illustré aux figures 1 à 4. Le premier lien 56A comprend une première portion de liaison, 58A et une première portion de préhension 62A et, le deuxième lien 56B comprend une deuxième portion de liaison 58B et une deuxième portion de préhension 62B. les première portion de liaison 58A et deuxième portion de liaison 58B sont agencées respectivement sur les éléments d'espacement 48 et 50. La première portion de liaison 58A est agencée sur l'élément d'espacement 48. La deuxième portion de liaison 58B est agencée sur l'élément d'espacement 50. On pourrait également prévoir, dans un autre mode de réalisation, que la première portion de liaison 58A et la deuxième portion de liaison 58B soient agencées sur la boucle supérieure 44 du harnais 24.

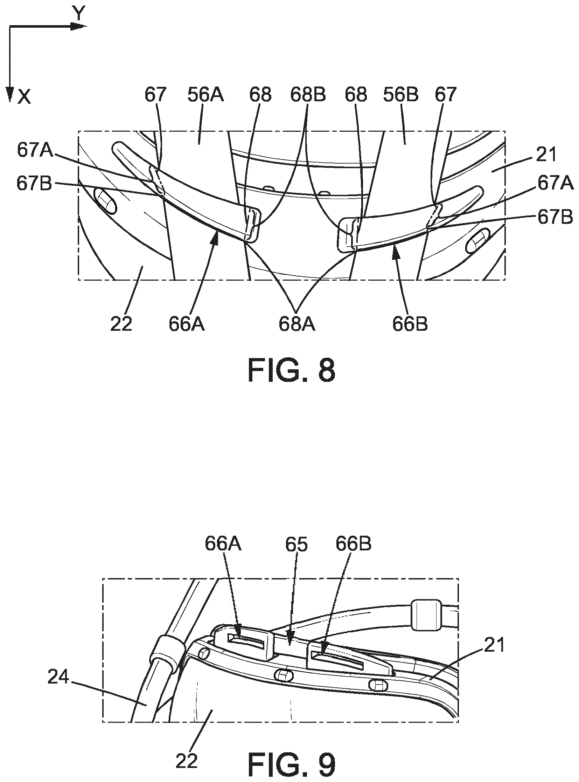

Par ailleurs, le dispositif de guidage 65 comprend un premier passage 66A et un deuxième passage 66B, comme visible sur la figure 9. Le premier passage 66A est apte à permettre le passage du premier lien 56A. Le deuxième passage 66B est apte à permettre le passage du deuxième lien 56B. Le premier passage 66A est séparé du deuxième passage 66B d'une distance D2. Chacun des premier passage 66A et deuxième passage 66B comprend une paroi latérale externe 67 et une paroi latérale interne 68. Comme illustré à la figure 8, pour chacun des premier passage 66A et deuxième passage 66B, les parois latérales externes 67 ne sont pas parallèles aux parois latérales internes 68. Plus précisément, le premier passage 66A et le deuxième passage 66B s'évasent en direction respectivement de la première portion de liaison 58A et de la deuxième portion de liaison 58B (en particulier, les parois latérales externes 67 sont courbes ou comprennent plusieurs segments rectilignes) pour faciliter le coulissement du premier lien 56A et du deuxième lien 56B au travers respectivement du premier passage 66A et du deuxième passage 66B. En outre, les parois latérales externes 67 et les parois latérales internes 68 comprennent des premières zones fonctionnelles 67A, 68A et des deuxièmes zones fonctionnelles 67B, 68B. Les premières zones fonctionnelles 67A, 68A et deuxièmes zones fonctionnelles 67B, 68B sont aptes à être en contact avec le premier lien 56A et le deuxième lien 56B. La zone fonctionelle 67A de la paroi latérale externe 67 est parallèle à la zone fonctionnelle 68 de la paroi latérale interne 68. Au cours du coulissement du premier lien 56A et du deuxième lien 56B au travers respectivement du premier passage 66A et du deuxième passage 66B, le premier lien 56A et le deuxième lien 56B sont en contact avec des zones fonctionnelles différentes. Lorsque le harnais 24 est dans la première position, le premier lien 56A et le deuxième lien 56B sont en contact avec les premières zones fonctionnelles 67A et 68A. Lorsque le harnais 24 est dans la deuxième position, le premier lien 56A et le deuxième lien 56B sont en contact avec les deuxièmes zones fonctionnelles 67A et 68A.

Tel qu'illustré à la figure 5, lorsque le harnais 24 est dans la position étendue, et en particulier lorsque le harnais 24 est gonflé, la première portion de liaison 58A est distante de la deuxième portion de liaison 58B d'une distance D1 supérieure à la distance D2 entre le premier passage 65A et le deuxième passage 65B, d'au moins 3 centimètres, de préférence d'au moins 5 centimètres.

La première portion de préhension 62A et la deuxième portion de préhension 62B sont très proches l'une de l'autre et de préférence réunis dans un élément de préhension 62 unique. L'élément de préhension 62, la portion de liaison 58A et la portion de liaison 58B forment un triangle isocèle dont l'élément de préhension constitue le sommet.

Lorsque le dispositif de traction 55 est dans la première position et que le harnais 24 est dans la position étendu non gonflé, la longueur L1 entre le dispositif de guidage 65 et, la première portion de liaison 58A et la deuxième portion de liaison 58B est beaucoup plus grande que la longueur L2 entre le dispositif de guidage 65 et, la première portion de préhension 62A et la deuxième portion de préhension 62B. En effet, la première portion de préhension 62A et la deuxième portion de préhension 62B sont quasiment au contact du dispositif de guidage 65. Le premier lien 56A et le deuxième lien 56B sont au contact de la paroi latérale interne 68 respectivement du premier passage 66A et du deuxième passage 66B.

Lorsque le dispositif de traction 55 est déplacé de la première position à la deuxième position, le harnais 24 est amené dans la position repliée 24, la longueur L1 entre le dispositif de guidage 65 et, la première portion de liaison 58A et la deuxième portion de liaison 58B est beaucoup plus petite que la longueur L2 entre le dispositif de guidage 65 et, la première portion de préhension 62A et la deuxième portion de préhension 62B. En effet, la première portion de liaison 58A et la deuxième portion de liaison 58B sont quasiment au contact du dispositif de guidage 65. Le premier lien 56A et le deuxième lien 56B sont au contact de la paroi latérale externe 67 respectivement du premier passage 66A et du deuxième passage 66B. La première portion de liaison 58A est alors distante de la deuxième portion de liaison 58B sensiblement égale à la distance D2 entre le premier passage 66A et le deuxième passage 66B. L'encombrement E du harnais 24 suivant la direction de l'axe transversal Y est ainsi réduit, ce qui facilite l'insertion du masque respiratoire 20 dans l'unité de rangement 54.

Il est à noter que les caractéristiques relatives à la sangle et aux liens 66A et 66B du deuxième exemple de réalisation décrit ci-dessus sont indépendantes l'une de l'autre. En effet, il est par exemple possible d'utiliser en combinaison un harnais 24 selon le deuxième exemple de réalisation et un lien 56 selon le premier exemple de réalisation. Dans ce cas, la portion de liaison 58 peut comprendre deux sous-portions de liaison. Chaque sous-portion de liaison peut ainsi être disposée respectivement sur un élément d'espacement 48, 58 ou sur la boucle 44. Le passage 66A est apte à permettre le passage du lien 56A.

## Revendications

1. Masque respiratoire (20) pour aéronef destiné à fournir un gaz respiratoire à un utilisateur comportant une coque (35) et un harnais gonflable (24), la coque (35) présentant une cavité respiratoire (34) et étant adaptée pour s'appliquer sur le visage de l'utilisateur autour de la bouche et du nez de l'utilisateur, le harnais (24) étant adapté pour s'étendre autour de la tête de l'utilisateur à l'opposé de la coque (35) afin de maintenir la coque (35) sur le visage de l'utilisateur, dans lequel:
- le masque respiratoire (20) comprend en outre un système de repliement (52) adapté pour faire passer le harnais (24) d'une position étendue à une position repliée,
- le système de repliement (52) comprend un dispositif de traction (55) et un dispositif de guidage (65),
- le dispositif de traction (55) présente une portion de liaison (58) reliée au harnais (24) et une portion de préhension (60),
- le dispositif de guidage (65) est relié à la coque (35),
- le dispositif de traction (55) est mobile entre :
• une première position dans laquelle le dispositif de traction (55) autorise le harnais (24) à être en position étendue, et
• une deuxième position dans laquelle le dispositif de traction (55) maintient le harnais (24) dans la position repliée, et
- le dispositif de guidage (65) coopère avec le dispositif de traction (55) pour guider le dispositif de traction (55) entre la position étendue et la position repliée.

2. Masque respiratoire (20) selon la revendication 1, dans lequel :
- le masque respiratoire (20) comprend en outre un écran de protection (22) adapté pour protéger les yeux de l'utilisateur, et
- le dispositif de guidage (65) est fixé à la coque (35) au-dessus de l'écran de protection (22), selon un axe vertical (Z).

3. Masque respiratoire (20) selon la revendication 2, dans lequel lorsque le harnais est en position étendue, la portion de préhension (60) est disposée au-dessus de l'écran de protection (22).

4. Masque respiratoire (20) selon l'une quelconque des revendications précédentes, dans lequel le dispositif de traction (55) est monté mobile en translation par rapport au dispositif de guidage (65), entre la première position et la deuxième position.

5. Masque respiratoire (20) selon l'une quelconque des revendications précédentes, dans lequel :
- le dispositif de traction (55) comprend une première portion de liaison (58A) reliée au harnais (24) et une deuxième portion de liaison (58B) reliée au harnais (24), lorsque le dispositif de traction est dans la première position la première portion de liaison (58A) est éloignée de la deuxième portion de liaison (58B) d'une première distance (D1),
- le dispositif de guidage (65) comprend un premier élément de guidage (66A) et un deuxième élément de guidage (66B), le premier élément de guidage (66A) est séparé du deuxième élément de guidage (66B) d'une deuxième distance (D2), et
- la première distance (D1) est supérieure à la deuxième distance (D2) d'au moins 3 centimètres.

6. Masque respiratoire (20) selon l'une quelconque des revendications précédentes, dans lequel le dispositif de traction (55) comprend une bande de matière élastiquement flexible.

7. Masque respiratoire (20) selon l'une quelconque des revendications précédentes, dans lequel le harnais (24) s'allonge en taille sous l'effet de l'introduction de gaz sous pression à l'intérieur du harnais (24).

8. Ensemble (73) comprenant un masque respiratoire (20) selon l'une quelconque des revendications précédentes et une unité de rangement (54) apte à recevoir le masque respiratoire (20), l'unité de rangement (54) comprenant un logement (51) et une ouverture d'accès (71) apte à permettre l'introduction du masque respiratoire (20) dans le logement, dans lequel, dans une position rangée de l'ensemble dans laquelle le masque respiratoire (20) est en position repliée, la portion de préhension (62) est disposée à proximité de l'ouverture d'accès (71).

9. Ensemble (73) selon la revendication précédente, dans lequel :
- le masque respiratoire comprend un support rigide (28) auquel est liée la coque (35) et présentant une zone de réception (27), et
- la portion de préhension (60) est maintenue entre le logement (51) et la zone de réception (27) du support rigide (28) lorsque l'ensemble (73) est dans la position rangée.

10. Procédé de repliement d'un masque respiratoire (20) pour son rangement dans une unité de rangement (54), le masque respiratoire (20) comprenant une coque (35), un harnais gonflable (24), un système de repliement (52), la coque (35) présentant une cavité respiratoire (34) et étant adaptée pour s'appliquer sur le visage d'un utilisateur, le système de repliement (52) comprenant un dispositif de traction (55) et un dispositif de guidage (65) coopérant avec le dispositif de traction (55), le dispositif de traction (55) comprenant une portion de préhension (60), dans lequel procédé dans une étape a) on tire sur le dispositif de traction (55) au travers du dispositif de guidage (65) en saisissant la portion de préhension (60) pour faire passer le masque respiratoire (20) d'une position initiale étendue à une position finale repliée.

11. Procédé de repliement selon la revendication précédente, dans lequel le masque respiratoire (20) comprend en outre un support rigide (28), le dispositif de traction (55) comprend un lien (56), le lien (56) présente une portion de liaison (58) et une portion de préhension (60), la portion de liaison (58) étant fixée sur le harnais (24), et dans
- une étape b), postérieure à l'étape a) on ramène la portion de préhension (60) au niveau du support rigide (28),
- dans une étape c), on insère le masque respiratoire (20) dans l'unité de rangement (54),
- dans une étape d) on dispose la portion de liaison (58) disposée à proximité de l'ouverture d'accès (71).

12. Procédé de repliement selon la revendication précédente, dans lequel l'étape c) est postérieure à l'étape b).

13. Procédé de repliement selon la revendication 11 ou 12, dans lequel, dans l'étape d) on place la portion de préhension (60) à proximité de l'ouverture d'accès (71) et on amène le dispositif de retenue (33) en coopération avec la portion de coopération (74).

14. Procédé de repliement selon l'une quelconque des revendications 11 à 13, dans lequel les étapes c) et d) se font simultanément.

15. Procédé de repliement selon l'une quelconque des revendications 11 à 13, dans lequel l'étape d) est postérieure à l'étape c).

## Patentansprüche

1. Atemschutzmaske (20) für ein Flugzeug zur Versorgung eines Benutzers mit einem Atemgas, umfassend eine Schale (35) und ein aufblasbares Gurtzeug (24), wobei die Schale (35) einen Atemhohlraum (34) aufweist und dazu ausgebildet ist, auf das Gesicht des Benutzers um Mund und Nase des Benutzers herum aufgelegt zu werden, wobei das Gurtzeug (24) dazu ausgebildet ist, sich um den Kopf des Benutzers herum gegenüber der Schale (35) zu erstrecken, um die Schale (35) über dem Gesicht des Benutzers zu halten, wobei :
- die Atemschutzmaske (20) ferner ein Faltsystem (52) umfasst, das dazu ausgebildet ist, das Gurtzeug (24) aus einer ausgefalteten Position in eine eingefaltete Position zu bewegen,
- das Faltsystem (52) eine Zugvorrichtung (55) und eine Führungsvorrichtung (65) umfasst,
- die Zugvorrichtung (55) einen mit dem Gurtzeug (24) verbundenen Verbindungsabschnitt (58) und einen Greifabschnitt (60) aufweist,
- die Führungsvorrichtung (65) mit der Schale (35) verbunden ist,
- die Zugvorrichtung (55) beweglich ist zwischen:
• einer ersten Position, in der die Zugvorrichtung (55) ermöglicht, dass das Gurtzeug (24) in der ausgefalteten Position ist, und
• eine zweite Position, in der die Zugvorrichtung (55) das Gurtzeug (24) in der eingefalteten Position hält, und
- die Führungsvorrichtung (65) mit der Zugvorrichtung (55) zusammenwirkt, um die Zugvorrichtung (55) zwischen der ausgefalteten Position und der eingefalteten Position zu führen.

2. Atemschutzmaske (20) nach Anspruch 1, wobei:
- die Atemschutzmaske (20) ferner einen Schutzschild (22) umfasst, der dazu ausgebildet ist, die Augen des Benutzers zu schützen, und
- die Führungsvorrichtung (65) an der Schale (35) oberhalb des Schutzschildes (22) entlang einer vertikalen Achse (Z) befestigt ist.

3. Atemschutzmaske (20) nach Anspruch 2, wobei der Greifabschnitt (60), wenn das Gurtzeug in der ausgefahrenen Position ist, über dem Schutzschild (22) angeordnet ist.

4. Atemschutzmaske (20) nach einem der vorhergehenden Ansprüche, wobei die Zugvorrichtung (55) relativ zur Führungsvorrichtung (65) zwischen der ersten Position und der zweiten Position zur Verschiebung beweglich angebracht ist.

5. Atemschutzmaske (20) nach einem der vorhergehenden Ansprüche, wobei:
- die Zugvorrichtung (55) einen ersten, mit dem Gurtzeug (24) verbundenen Verbindungsabschnitt (58A), und einen zweiten, mit dem Gurtzeug (24) verbundenen Verbindungsabschnitt (58B) umfasst, wobei der erste Verbindungsabschnitt (58A) von dem zweiten Verbindungsabschnitt (58B) um einen ersten Abstand (D1) entfernt ist, wenn sich die Zugvorrichtung in der ersten Position befindet,
- die Führungsvorrichtung (65) ein erstes Führungselement (66A) und ein zweites Führungselement (66B) umfasst, wobei das erste Führungselement (66A) von dem zweiten Führungselement (66B) durch einen zweiten Abstand (D2) getrennt ist, und
- der erste Abstand (D1) um wenigstens 3 Zentimeter größer ist als der zweite Abstand (D2).

6. Atemschutzmaske (20) nach einem der vorhergehenden Ansprüche, wobei die Zugvorrichtung (55) einen Streifen aus elastisch flexiblem Material umfasst.

7. Atemschutzmaske (20) nach einem der vorhergehenden Ansprüche, wobei sich das Gurtzeug (24) durch die Einführung von Druckgas in das Innere des Gurtzeugs (24) in der Größe verlängert.

8. Anordnung (73), umfassend eine Atemschutzmaske (20) nach einem der vorhergehenden Ansprüche und eine Aufbewahrungseinheit (54), die die Atemschutzmaske (20) aufnehmen kann, wobei die Aufbewahrungseinheit (54) ein Gehäuse (51) und eine Zugangsöffnung (71) aufweist, die das Einführen der Atemschutzmaske (20) in das Gehäuse ermöglichen kann, **dadurch gekennzeichnet, dass** in einer Aufbewahrungsposition der Anordnung, in der sich die Atemschutzmaske (20) in einer gefalteten Position befindet, der Greifabschnitt (62) in der Nähe der Zugangsöffnung (71) angeordnet ist.

9. Anordnung (73) nach dem vorhergehenden Anspruch, wobei:
- die Atemschutzmaske einen starren Träger (28) aufweist, mit dem die Schale (35) verbunden ist und der einen Aufnahmebereich (27) aufweist, und
- der Greifabschnitt (60) zwischen dem Gehäuse (51) und dem Aufnahmebereich (27) des starren Trägers (28) gehalten ist, wenn sich die Anordnung (73) in der aufbewahrten Position befindet.

10. Verfahren zum Falten einer Atemschutzmaske (20) zur Aufbewahrung in einer Aufbewahrungseinheit (54), wobei die Atemschutzmaske (20) eine Schale (35), ein aufblasbares Gurtzeug (24) und ein Faltsystem (52) umfasst, wobei die Schale (35) einen Atemhohlraum (34) aufweist und dazu ausgebildet ist, auf das Gesicht eines Benutzers aufgelegt zu werden, wobei das Faltsystem (52) eine Zugvorrichtung (55) und eine Führungsvorrichtung (65) umfasst, die mit der Zugvorrichtung (55) zusammenwirkt, wobei die Zugvorrichtung (55) einen Greifabschnitt (60) umfasst, wobei in Schritt a) an der Zugvorrichtung (55) durch Greifen des Greifabschnitts (60) durch die Führungsvorrichtung (65) gezogen wird, um die Atemschutzmaske (20) aus einer ausgefalteten Ausgangsposition in eine eingefaltete Endposition zu bewegen.

11. Faltverfahren nach dem vorhergehenden Anspruch, wobei die Atemschutzmaske (20) ferner einen starren Träger (28) aufweist, die Zugvorrichtung (55) ein Band (56) umfasst, das Band (56) einen Verbindungsabschnitt (58) und einen Greifabschnitt (60) aufweist, wobei der Verbindungsabschnitt (58) an dem Gurtzeug (24) befestigt ist, und wobei in
- einem Schritt b) im Anschluss an Schritt a) der Greifabschnitt (60) auf die Höhe des starren Trägers (28) gebracht wird,
- einem Schritt c) die Atemschutzmaske (20) in die Aufbewahrungseinheit (54) eingeführt wird,
- einem Schritt d) der in der Nähe der Zugangsöffnung (71) angeordnete Verbindungsabschnitt (58) angeordnet wird.

12. Faltverfahren nach dem vorhergehenden Anspruch, wobei Schritt c) auf Schritt b) folgt.

13. Faltverfahren nach Anspruch 11 oder 12, wobei in Schritt d) der Greifabschnitt (60) in der Nähe der Zugangsöffnung (71) angeordnet wird und die Haltevorrichtung (33) mit dem Eingriffsabschnitt (74) in Eingriff gebracht wird.

14. Faltverfahren nach einem der Ansprüche 11 bis 13, wobei die Schritte c) und d) gleichzeitig ausgeführt werden.

15. Faltverfahren nach einem der Ansprüche 11 bis 13, wobei Schritt d) auf Schritt c) folgt.

## Claims

1. Breathing mask (20) for aircraft designed to provide a breathing gas to a user comprising a shell (35) and an inflatable harness (24), the shell (35) having a breathing cavity (34) and being adapted to be applied onto the user's face around the user's mouth and nose, the harness (24) being adapted to extend around the user's head opposite the shell (35) so as to hold the shell (35) on the user's face, wherein:
- the breathing mask (20) also comprises a folding system (52) adapted to make the harness (24) move from an extended position to a folded position,
- the folding system (52) comprises a pulling device (55) and a guide device (65).
- the pulling device (55) has a connecting portion (58) connected to the harness (24) and a gripping portion (60),
- the guide device (65) is connected to the shell (35),
- the pulling device (55) is free to move between:
• a first position in which the pulling device (55) allows the harness (24) to be in the extended position, and
• a second position in which the pulling device (55) holds the harness (24) in the folded position, and
- the guide device (65) cooperates with the pulling device (55) to guide the pulling device (55) between the extended position and the folded position.

2. Breathing mask (20) according to claim 1, wherein:
- the breathing mask (20) also comprises a protection screen (22) adapted to protect the user's eyes, and
- the guide device (65) is fixed to the shell (35) above the protection screen (22), along a vertical (Z) axis.

3. Breathing mask (20) according to claim 2 wherein, when the harness is in the extended position, the gripping portion (60) is located above the protection screen (22).

4. Breathing mask (20) according to any one of the preceding claims, wherein the pulling device (55) is installed free to move in translation relative to the guide device (65), between the first position and the second position.

5. Breathing mask (20) according to any one of the preceding claims, wherein:
- the pulling device (55) comprises a first connecting portion (58A) connected to the harness (24) and a second connecting portion (58B) connected to the harness (24), when the pulling device is in the first position the first connecting portion (58A) is at a distance from the second connecting portion (58B) by a first distance (D1),
- the guide device (65) comprises a first guide element (66A) and a second guide element (66B), the first guide element (66A) is separated from the second guide element (66B) by a second distance (D2), and
- the first distance (D1) is more than the second distance (D2) by at least 3 centimetres.

6. Breathing mask (20) according to any one of the preceding claims, wherein the pulling device (55) comprises a band of elastically flexible material.

7. Breathing mask (20) according to any one of the preceding claims, wherein the harness (24) extends in size under the effect of introducing gas under pressure insider the harness (24).

8. Assembly (73) comprising a breathing mask (20) according to any one of the preceding claims and a storage unit (54) inside which the breathing mask (20) will fit, the storage unit (54) comprising a housing (51) and an access opening (71) through which the breathing mask (20) is inserted into the housing, wherein in a stored position of the assembly in which the breathing mask (20) is in the folded position, the gripping portion (62) is located close to the access opening (71).

9. Assembly (73) according to the preceding claim, wherein:
- the breathing mask comprises a rigid support (28) to which the shell (35) is attached and with a reception zone (27), and
- the gripping portion (60) is held in place between the housing (51) and the reception zone (27) of the rigid support (28) when the assembly (73) is in the stored position.

10. Method of folding a breathing mask (20) to store it in a storage unit (54), the breathing mask (20) comprising a shell (35), an inflatable harness (24), a folding system (52), the shell (35) having a breathing cavity (34) and being adapted to be applied onto the face of a user, the folding system (52) comprising a pulling device (55) and a guide device (65) cooperating with the pulling device (55), the pulling device (55) comprising a gripping portion (60), in which process in a step a) the pulling device (55) is pulled through the guide device (65) by gripping the gripping portion (60) to pull the breathing mask (20) from an initial extended position to a final folded position.

11. Folding method according to the preceding claim, wherein the breathing mask (20) also comprises a rigid support (28), the pulling device (55) comprises a tie (56), the tie (56) has a connecting portion (58) and a gripping portion (60), the connecting (58) portion being fixed onto the harness (24), and
- in a step b) subsequent to step a), the gripping portion (60) is brought back to the rigid support (28),
- in a step c), the breathing mask (20) is inserted in the storage unit (54),
- in a step d), the connecting portion (58) is placed close to the access opening (71).

12. Folding method according to the preceding claim wherein step c) is done after step b).

13. Folding method according to claim 11 or 12, wherein in step d), the gripping portion (60) is placed close to the access opening (71) and the retaining device (33) is brought to cooperate with the cooperation portion (74).

14. Storage method according to any one of claims 11 to 13, wherein steps c) and d) are performed simultaneously.

15. Storage method according to one of claims 11 to 13, wherein step d) is done after step c).
